# FASCICULE DE BREVET EUROPEEN

(11) **EP 2 611 233 B1**
(45) Date de publication et mention de la délivrance du brevet: **09.07.2014**
(21) Numéro de dépôt: 12199366.1
(22) Date de dépôt: 24.12.2012
(51) Int. Cl.: H04W 28/06, H04W 40/20, H04W 48/04

(54) **Procédé de communication entre deux réseaux distincts de noeuds de radiocommunications, module de traitement et programme d'ordinateur associés**
Verfahren zur Kommunikation zwischen zwei verschiedenen Netzwerken aus Radiokommunikationsknoten, Verarbeitungsmodul und zugehöriges Computerprogrammprodukt
Method of communication between two distinct networks comprising radio communication nodes, processing module and associated computer programs

(30) Priorité: 29.12.2011 FR 1104143
(43) Date de publication de la demande: 03.07.2013
(73) Titulaire: Thales, 92200 Neuilly Sur Seine (FR)
(72) Inventeur: Soulie, M. Antoine, 92622 Gennevilliers Cedex (FR)
(74) Mandataire: Blot, Philippe Robert Emile

(56) Documents cités:
- EP-A1- 1 134 939
- US-A1- 2009 122 738

## Description

La présente invention concerne un procédé de communication entre un premier et un deuxième réseau distinct de noeuds de radiocommunications reliés par un système de passerelle, les noeuds étant dotés de moyens de radiocommunications et de moyens de localisation géographique.

Les premier et deuxième réseaux sont par exemple des réseaux ad hoc.

De manière connue, un réseau ad hoc est dépourvu d'infrastructure fixe et des stations, équipées de moyens d'émission et/ou réception radio et de protocoles adéquats, forment les noeuds du réseau et communiquent entre elles par l'intermédiaire d'un canal radio, ou de plusieurs canaux radio, partagé(s).

Les réseaux ad hoc sont notamment utilisés pour mettre en oeuvre des communications tactiques entre des équipes militaires, mobiles sur des zones de combat. Par exemple, chaque équipe est dotée d'une station d'émission/réception radio qui constitue un noeud d'un réseau ad hoc. Plusieurs équipes sont généralement regroupées en des groupes, les équipes au sein d'un même groupe relevant par exemple d'un même commandement hiérarchique. Des groupes peuvent en outre être issus de forces militaires de pays différents.

Certains des groupes peuvent utiliser des protocoles de communication qui leur sont propres. Ainsi des réseaux de communication ad hoc hétérogènes peuvent être déployés sur une même zone, et ne peuvent communiquer les uns avec les autres.

Chaque groupe constitue généralement un réseau ad hoc, ou sous-réseau ad hoc, de transmission ad hoc dédié au groupe.

Des ressources de communication radio distinctes sont affectées à chacun de ces réseaux ou sous-réseaux, par exemple au moins un canal radio ou une portion temporelle déterminée d'un tel canal.

Ci-dessous, on appelle réseau un tel réseau ou sous-réseau.

De telles situations d'équipes alliées utilisant des réseaux de transmission hétérogènes sont également rencontrées dans les phases de migration technique des moyens de communication radio.

Dans un tel environnement, des tirs fratricides peuvent être évités par la connaissance, au niveau des noeuds d'un réseau dédié à une équipe, de la situation géographique des équipes alliées, en mettant en oeuvre un service de diffusion de données indiquant la position de chaque noeud dans son voisinage géographique. Ce service est appelé « Blue Force Tracking » (BFT). La position d'un noeud est par exemple fournie par un module de détection de position dont le noeud est doté, typiquement un module GPS (en anglais « Global Positioning System »).

Le service BFT doit être rendu disponible sur l'ensemble des réseaux et sous-réseaux sur une même zone géographique, c'est-à-dire qu'un tel message de position doit être reçu par les noeuds dans un voisinage géographique du noeud émetteur, qu'ils fassent partie du même réseau que ce noeud émetteur ou d'un autre réseau.

Classiquement, tout message ou paquet devant être diffusé d'un réseau vers un autre l'est via au moins un noeud inter-réseaux. Dans le cas d'un message BFT, un tel traitement s'applique également, puisque l'état de l'art actuel n'utilise pas d'information géographique pour filtrer la diffusion. Ainsi les positions des noeuds d'un réseau sont transmises d'un réseau à tous les noeuds d'un autre réseau par l'intermédiaire d'au moins un noeud spécifique, dit noeud passerelle. Ceci génère une charge importante sur les réseaux radio, en particulier s'ils sont des réseaux ad hoc, puisque chaque mise à jour de position d'un noeud donne lieu à un message qui doit être communiqué à l'ensemble des noeuds de l'autre réseau, via le(s) noeud(s) passerelle(s), en l'absence de filtrage.

Ces problématiques de charge ont pour conséquence qu'il n'est pas possible de fournir un service BFT global dans une zone sur laquelle des noeuds de réseaux distincts en nombre conséquent (par exemple de 50 à 100 noeuds par réseau) sont déployés, les zones de couverture radio de chaque réseau pouvant se recouvrir au moins partiellement ou être adjacentes.

Il est donc besoin d'une solution qui permette la mise en oeuvre d'un service de Blue Force Tracking tenant compte :
- de cette hétérogénéité des moyens de communication radio, donnant lieu à l'impossibilité de systématiquement recevoir pour un noeud, la position d'un noeud voisin au sens géographique mais utilisant un moyen de communication différent,
- de l'impossibilité de procéder à de la diffusion systématique (dite « par inondation ») des positions entre les différents réseaux élémentaires, ce qui induit des problèmes de surcharge sur les réseaux les plus contraints en terme de bande passante (i.e. diffusion d'un message BFT chaque 10 s par chacun de 200 noeuds dans un réseau de moins de 2kb/s à partager entre l'ensemble des participants). Le document D1: EP 1134939 (Lucent Technologies) est concerné avec la propagation d'une position des noeuds d'une manière optimisée.

La présente invention vise à proposer une telle solution.

A cet effet, suivant un premier aspect, l'invention propose un procédé de communication entre un premier et un deuxième réseau distinct de noeuds de radiocommunications ad hoc tel que mentionné ci-dessus, caractérisé en ce qu'il comprend les étapes suivantes :
a/ collecter des premières, respectivement deuxièmes, informations de localisation géographique des noeuds du premier, respectivement deuxième, réseau, lesdites informations étant déterminées et transmises par lesdits noeuds ;
b/ déduire une première, respectivement deuxième, zone de couverture géographique du premier, respectivement deuxième, réseau en fonction des premières, respectivement deuxièmes, informations de localisation géographique ;
c/ déterminer une zone d'intersection des première et deuxième zones de couvertures géographiques ;
d/ identifier en fonction des premières, respectivement deuxièmes, informations de localisation collectées, des noeuds du premier, respectivement deuxième, réseau, localisés à l'intérieur de ladite zone d'intersection ;
e/ transmettre auxdits noeuds du premier réseau identifiés, depuis le système de passerelle et via ledit premier noeud, des données indiquant les localisations géographiques collectées des noeuds du deuxième réseau identifiés.

Dans des modes de réalisation, l'invention présente en outre une ou plusieurs des caractéristiques suivantes :
- le procédé comprend en outre l'étape suivante:
   f/ transmettre auxdits noeuds du deuxième réseau identifiés, depuis le système de passerelle, via ledit deuxième noeud, des données indiquant les localisations géographiques collectées des noeuds du premier réseau identifiés ;
- le premier réseau et/ou le deuxième réseau est un réseau radiocommunications ad hoc ;
- certaines des étapes a/ à d/, ou toutes les étapes a/ à d/, sont mises en oeuvre par des noeuds de radiocommunications ad hoc ;
- certaines des étapes a/ à d/, ou toutes les étapes a/ à d/, sont mises en oeuvre par le système passerelle ;
- les données indiquant les localisations géographiques collectées des noeuds identifiés sont accompagnées de données d'identification desdits noeuds identifiés et/ou d'une indication temporelle relative à la localisation ;
- au moins les étapes a/ à d/ sont réitérées régulièrement suite à la transmission par les noeuds d'informations actualisées de localisation ;
si à l'étape c/, il est déterminé que les première et deuxième zones de couverture géographique ne comportent pas de zone d'intersection, une distance entre les première et deuxième zones de couverture géographique est calculée, et une période d'actualisation de la localisation géographique des noeuds est déterminée en fonction d'au moins ladite distance calculée.

Suivant un second aspect, l'invention propose un module de traitement adapté pour opérer dans un système de communication comportant un premier réseau de noeuds de radiocommunications relié par un système de passerelle à un deuxième réseau distinct de noeuds de radiocommunications, le système de passerelle comprenant des premiers moyens de télécommunications avec au moins un premier noeud du premier réseau et des deuxièmes moyens de télécommunications avec un deuxième noeud du deuxième réseau, les noeuds étant dotés de moyens de radiocommunications et de moyens de localisation géographique,
le module de traitement étant caractérisé en ce qu'il est adapté pour collecter des premières informations de localisation géographique des noeuds du premier réseau, lesdites informations étant déterminées et transmises par lesdits noeuds, et pour en déduire une première zone de couverture géographique du premier réseau ;
le module de traitement est en outre adapté pour déterminer une zone d'intersection entre ladite première zone de couverture géographique et une deuxième zone de couverture du deuxième réseau et pour identifier, en fonction des premières informations de localisation collectées, des noeuds du premier réseau localisés à l'intérieur de ladite zone d'intersection ;
le module de traitement étant adapté pour recevoir des données provenant du système de passerelle et indiquant des localisations géographiques au moins de noeuds du deuxième réseau identifiés comme localisés dans la zone d'intersection et pour transmettre auxdits noeuds du premier réseau identifiés, via ledit premier noeud, lesdites données indiquant les localisations géographiques collectées des noeuds du deuxième réseau identifiés.

Suivant un troisième aspect, l'invention propose une station émettrice/réceptrice adaptée pour constituer un noeud d'un réseau ad hoc et comportant un module de traitement suivant le second aspect de l'invention.

Suivant un quatrième aspect, l'invention propose un programme d'ordinateur adapté pour constituer un noeud d'un réseau, ledit programme comprenant des instructions pour mettre en oeuvre les étapes suivantes lors d'une exécution du programme par des moyens de traitement de ladite station :
- collecter des premières informations de localisation géographique des noeuds d'un premier réseau dont fait partie la station, lesdites informations étant déterminées et transmises par lesdits noeuds, et pour en déduire une première zone de couverture géographique du premier réseau ;
- déterminer une zone d'intersection entre ladite première zone de couverture géographique et une deuxième zone de couverture d'un deuxième réseau distinct du premier réseau et identifier, en fonction des premières informations de localisation collectées, des noeuds du premier réseau localisés à l'intérieur de ladite zone d'intersection ;
- recevoir des données indiquant des localisations géographiques au moins de noeuds du deuxième réseau identifiés comme localisés dans la zone d'intersection et transmettre auxdits noeuds du premier réseau identifiés lesdites données indiquant les localisations géographiques collectées des noeuds du deuxième réseau identifiés.

D'autres caractéristiques et avantages de l'invention apparaîtront encore à la lecture de la description qui va suivre. Celle-ci est purement illustrative et doit être lue en regard des dessins annexés sur lesquels :
- la figure 1 est une vue d'un véhicule transportant une équipe d'intervention et constituant un noeud d'un réseau ad hoc ;
- la figure 2 représente une zone d'intervention militaire sur laquelle opèrent des équipes utilisant des réseaux de radiocommunication distincts ;

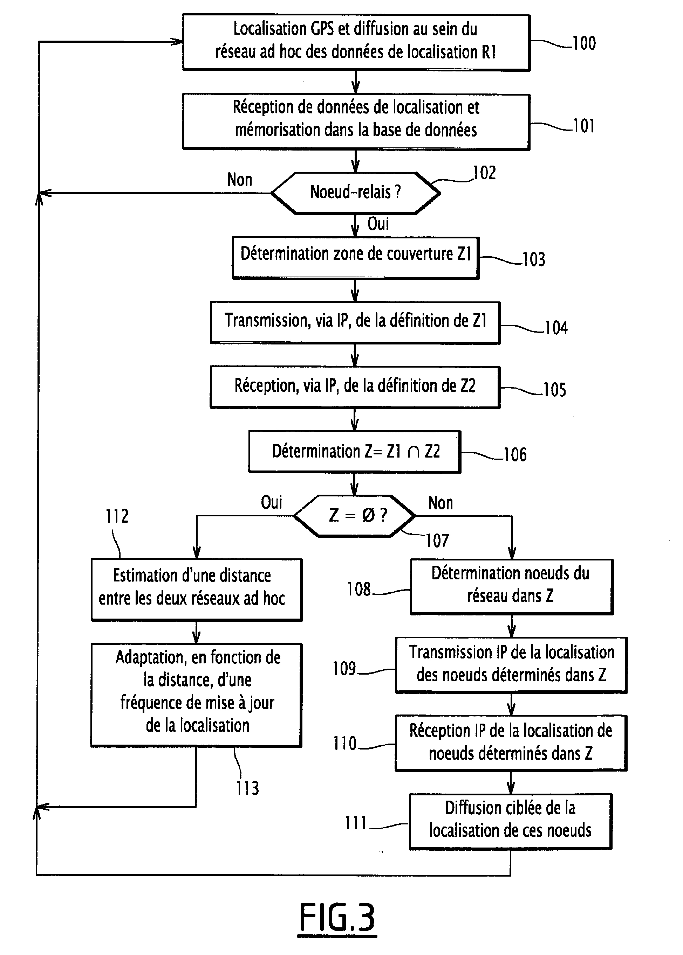

- la figure 3 est un organigramme représentant des étapes dans un mode de mise en oeuvre de l'invention.

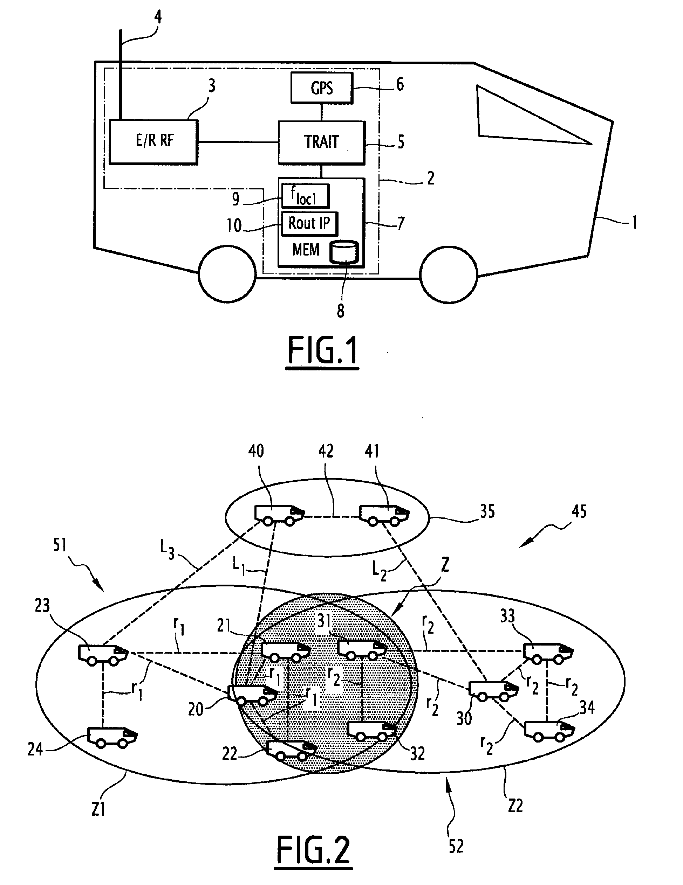

Sur la figure 1 est représentée un véhicule blindé 1 doté d'une station de communication 2 destinée à constituer un noeud 2 d'un réseau ad hoc.

Une station de communication 2 comporte un module de traitement 5, un module GPS 6 et une mémoire 7.

La mémoire 7 comporte une base de données 8.

Le module de traitement 5 est adapté pour piloter le fonctionnement des différents composants du noeud 2 et comporte notamment un microprocesseur sur lequel des logiciels stockés en mémoire 7 s'exécutent.

Une station de communication 2 comporte en outre, en vue d'échanger des trames de signal avec un noeud voisin, par l'intermédiaire d'un canal radio partagé, un module radio d'émission/réception radiofréquence 3 relié à une antenne 4.

Le canal radio partagé affecté au noeud peut être prédéterminé, ou choisi par la station 2 dans une liste stockée par exemple dans la mémoire 7 en fonction de divers critères, notamment résultant d'échanges de signalisation avec des noeuds voisins.

Le module radio 3 comprend une couche d'accès au milieu MAC (Médium Access Control), une couche physique Bande de Base, une couche physique radio fréquence. Le module radio 3 est adapté pour, sous le pilotage de l'unité de traitement 5, recevoir et traiter un signal radio fréquence en provenance de l'antenne 4, ou permettre l'élaboration et l'émission d'un signal radio fréquence depuis l'antenne 4.

Dans un mode de réalisation, les signaux échangés sont conformes au protocole au protocole IEEE 802.11 ou à des protocoles non standardisés en vigueur dans le domaine des radiocommunications militaires, et comportent par exemple des données de communications vocales, des messages de type SMS, MMS ou de messagerie instantanée.

Dans le mode de réalisation considéré, le module radio 3 est adapté pour opérer, sous le pilotage du module de traitement 5, en mode de communication half-duplex.

Dans le mode de réalisation considéré, le module radio 3 est en outre adapté pour opérer, en réception et en émission, sur un canal radio seulement à tout moment.

La station de communication 2 est adaptée pour mettre en oeuvre régulièrement, sous le pilotage du module de traitement 5, une fonction, f_{loc1} 9, de diffusion de la localisation de la station. Cette fonction correspond à des instructions logicielles stockées dans la mémoire 7 et exécutées sur le microprocesseur du module de traitement 5. Elle comprend la commande de localisation de la station au module GPS 6, la détermination de la localisation de la station 2 par le module GPS 6 et l'émission par le module radio 3 de la station 2 sur un canal radio affecté pour l'émission de la station 2, d'un message comportant des données indiquant la localisation déterminée, ces étapes étant réitérées par exemple à une fréquence F_{loc1}.

Dans un cycle de communication, le noeud radio 2 est adapté pour, dans une phase d'émission, émettre des données indiquant sa présence et comportant notamment un identifiant, et/ou émettre des données à relayer et/ou des données indiquant sa localisation par exemple déterminées par la fonction f_{loc1}.

Dans une phase de réception du cycle de communication, le noeud radio 2 est adapté pour recevoir des données sur le canal radio qui lui est affecté, indiquant la présence d'autres noeuds à proximité radio, et/ou des données à relayer, et/ou des données indiquant la localisation d'autres noeuds.

Dans le mode de réalisation considéré, le noeud 2 met à jour sa base de données 8 en y enregistrant d'une part, dans une liste de voisins radio, les identifiants des noeuds qui sont à sa portée radio, ie qui ont indiqué leur présence sur le canal radio et en y enregistrant d'autre part la localisation des noeuds au sujet desquels il a reçu des données de localisation.

La figure 2 représente une zone d'intervention militaire 45 sur laquelle des véhicules blindés opèrent. Ces véhicules 20, 21, 22, 23, 24, 30, 31, 32, 33, 34 sont similaires au véhicule blindé 1 représenté en figure 1 et transportent des équipes militaires alliées respectives.

Ces véhicules donnent lieu à l'établissement de deux réseaux de noeuds ad hoc distincts 51 et 52.

Ci-dessous, le véhicule et le noeud qu'il contient sont identifiés par les mêmes références. Par ailleurs, un module d'un noeud identifié en figure 1 avec une référence 3 à 8 sera identifié ci-dessous avec cette même référence indicée par la référence du noeud considéré telle qu'utilisée en figure 2 : ainsi, le module de traitement du noeud 20 sera identifiée ci-dessous par la référence 5₂₀.

Ainsi les noeuds 20, 21, 22, 23, 24 constituent un premier réseau ad hoc 51 et communiquent entre eux de proche en proche par l'intermédiaire d'un même canal radio r1. Des liens radios directs sont établis entre les noeuds à portée radio l'un de l'autre, soit entre les noeuds 20 et 21, les noeuds 21 et 22, les noeuds 21 et 23, les noeuds 20 et 23, les noeuds 23 et 24, les noeuds 20 et 22.

Dans le premier réseau ad hoc 51, deux noeuds quelconques parmi les noeuds 20, 21, 22, 23, 24 peuvent communiquer l'un avec l'autre par transmission de données sur le canal r1 soit directement lorsqu'ils sont à portée radio l'un de l'autre, soit par relayage entre des noeuds intermédiaires du premier réseau 51.

Les noeuds 30, 31, 32, 33, 34 constituent un deuxième réseau ad hoc 52 et communiquent entre eux de proche en proche par l'intermédiaire d'un même canal radio r2 distinct du canal radio r2. Des liens radios directs sont établis entre les noeuds à portée radio l'un de l'autre, soit entre les noeuds 30 et 31, les noeuds 30 et 33, les noeuds 30 et 34, les noeuds 33 et 34, les noeuds 31 et 32, les noeuds 31 et 32.

Dans le deuxième réseau ad hoc 52, deux noeuds quelconques parmi les noeuds 30, 31, 32, 33, 34 peuvent communiquer l'un avec l'autre par transmission de données sur le canal r2 soit directement lorsqu'ils sont à portée radio l'un de l'autre, soit par relayage entre des noeuds intermédiaires du deuxième réseau.

Le protocole de communication mis en oeuvre dans chacun de ces réseaux est par exemple de type OLSR (en anglais « Optimized Link State Routing Protocol »).

Les messages de localisation émis par chacun des noeuds du premier réseau 51 sont transmis, sur le canal r1, aux voisins géographiques dudit noeud dans le premier réseau ainsi qu'aux noeuds 20 et 23 en tant que noeuds-relais du premier réseau tels que définis ci-après. De même, les messages de localisation émis par chacun des noeuds du deuxième réseau 52 sont transmis, sur le canal r2, aux voisins géographiques dudit noeud dans le deuxième réseau ainsi qu'au noeud 30 en tant que noeud-relais du deuxième réseau tels que défini ci-après.

Ces messages de localisation concernant le premier réseau 51 ne peuvent pas être transmis au deuxième réseau 52 directement par les moyens de radiocommunication ad hoc puisque le premier réseau ad hoc 51 n'utilise pas les mêmes ressources radio que le deuxième réseau ad hoc 52, et vice-versa.

Et il ne peut pas y avoir détection par un noeud du premier réseau 51 de la présence à proximité d'un noeud du deuxième réseau 52 puisque le noeud du premier réseau 51 écoute en réception le canal r1, alors que le noeud du deuxième réseau 52 signale sa présence sur le canal radio r2 et vice-versa.

Or il serait intéressant, pour éviter des tirs entre deux véhicules situés à proximité l'un de l'autre et appartenant à des réseaux distincts, de connaître leurs positions respectives.

Dans le mode de réalisation considéré, l'émission et réception radiofréquence par les noeuds d'un réseau ad hoc donné ont lieu sur un même canal. Dans d'autres modes de réalisation, le canal d'émission est distinct du canal de réception.

Dans le mode de réalisation décrit ci-dessus, la localisation d'un noeud est réalisée à l'aide d'un module GPS. Bien entendu, l'invention peut être mise en oeuvre avec des moyens de localisation autres, par exemple une centrale inertielle etc.

L'invention peut être mise en oeuvre entre deux, ou plus, réseaux ad hoc hétérogènes, quelles que soient leurs disparités et notamment, les différences entre leurs protocoles de communication respectifs : par exemple, les canaux radios utilisés et/ou les formes d'ondes et/ou les protocoles de communication mis en oeuvre ... L'invention peut également être mise en oeuvre entre un réseau ad hoc et un réseau cellulaire, voire entre deux réseaux cellulaires (par exemple opérés par des opérateurs d'internet mobile distincts).

Dans un mode de réalisation de l'invention, un système de passerelle 35 est mis en oeuvre entre le premier réseau ad hoc 51 et le deuxième réseau ad hoc 52, permettant de communiquer des données entre ces deux réseaux.

Le système de passerelle 35 est connecté à au moins un noeud du premier réseau 51 et à au moins un noeud du deuxième réseau 52, qui sont appelés des noeuds-relais. Il est adapté pour échanger des données avec chacun de ces noeuds, et pour relayer au moins certaines de ces données entre ces noeuds, éventuellement après avoir effectué certains traitements, par exemple d'agrégation des données de localisation fournies par les noeuds-relais, de mise en forme pour adapter à la forme d'onde spécifique employée par chacun de ces réseaux (dans un mode de réalisation, certaines au moins de ces opérations sont effectuées dans les noeuds-relais eux-mêmes, notamment mise en file d'attente en fonction de la priorité, définition de la fiabilisation de la diffusion sur le réseau ad hoc, répétition des messages perdus). Le relayage mis en oeuvre entre les deux réseaux ad hoc est par exemple mis en oeuvre à l'aide d'un réseau de télécommunications mettant en oeuvre des moyens radio cellulaires, et/ou filaires et/ou satellites.

Dans le cas considéré, le système de passerelle 35 est relié au noeud 20, respectivement au noeud 23, du premier réseau ad hoc 51 par une liaison de télécommunication L1, respectivement L3, par exemple radio. Le système de passerelle 35 est relié au noeud 30 du deuxième réseau ad hoc 52 par une liaison de télécommunication L2 par exemple radio. Dans le cas présent, le protocole de communication utilisé par le système de passerelle, y compris les liaisons L1, L2 et L3, est un protocole IP (« internet Protocol »).

Dans le cas considéré, la liaison IP L1 a pour extrémité le noeud 20 et un noeud 40, la liaison IP L3 a pour extrémité le noeud 23 et le noeud 40, la liaison IP L2 a pour extrémité le noeud 30 et un noeud 41, et un bond IP 42 par exemple radio sépare les noeuds 40 et 41. Le système de passerelle 35 peut comprendre un ou plusieurs routeurs IP, et un nombre quelconque de bonds, voire aucun bond en plus des liaisons L1 à L3. Les noeuds 20, 23, et 30, ainsi que l'ensemble des noeuds du système de passerelle 35, ici les noeuds 40, 41, sont identifiés par un identifiant.

Les noeuds 20, 23 et 30 jouent le rôle de noeuds-relais entre les deux réseaux ad hoc, via le système de passerelle 35. Une table de routage IP 10, identifiant les adresses IP de l'ensemble ces noeuds, identifiant les noeuds-relais actifs et comportant des règles de routage adaptées pour permettre la transmission de données depuis chacun de ces noeuds jusqu'à un destinataire est stockée dans la mémoire 7 d'au moins les noeuds-relais actifs.

Dans un mode de réalisation de l'invention, chaque noeud des premier 51 et deuxième 52 réseaux ad hoc est adapté pour mettre en oeuvre les étapes indiquées ci-après.

Par exemple, tout ou partie de ces étapes sont mises en oeuvre par un noeud 2 suite à l'exécution sur le microprocesseur du module de traitement 5, d'instructions logicielles stockées dans la mémoire 7.

Dans une étape 100, comme indiqué plus haut, chaque noeud 2 considéré réalise des opérations de localisation, puis de diffusion de ses données de localisation, en mettant en oeuvre sa fonction de diffusion de localisation f_{loc1} à une fréquence F_{loc1} dont la valeur est définie dans la mémoire 7.

Dans une étape 101, le noeud considéré reçoit régulièrement les données de position des noeuds faisant partie de son réseau ad hoc, sur le canal radio de son réseau (r1 pour le premier réseau, r2 pour le deuxième réseau) et en fonction de ces données reçues, il met à jour dans sa base de données 8 les données de localisation associées aux identifiants de ces noeuds.

Dans une étape 102, le noeud considéré détermine s'il joue un rôle de noeud-relais actif vers un autre réseau ad hoc que le sien en fonction de la présence et/ou du contenu de la table de routage mémorisée dans sa mémoire 7.

Seulement si le noeud est un noeud-relais, par exemple le noeud 20, alors il met en oeuvre les étapes 103 à 113 suivantes.

Dans une étape 103, le noeud 20 détermine la zone de couverture radio Z1 du premier réseau ad hoc 51 dont il fait partie, en fonction des positions géographiques des noeuds ad hoc faisant partie du premier réseau 51 mémorisées dans sa base de données 8₂₀. Typiquement, cette zone correspond à la somme des couvertures radio correspondant à chaque noeud du premier réseau ad hoc 51, par exemple un cercle de rayon d'environ 5 km autour de chaque noeud 20 à 24 (par exemple un rayon de 5 à 10 km pour une diffusion VHF de 5 W, un rayon de 3 à 5 km pour une diffusion UHF de 5 W, un rayon de 8 à 10 km pour une diffusion GSM). Dans un mode de réalisation, cette détermination de couverture radio prend en compte le type d'urbanisation de la zone d'intervention 45.

Dans une étape 104, des données de définition de la zone de couverture Z1 (par exemple du contour ou d'un contour approximé) du premier réseau ad hoc 51 dont fait partie le noeud-relais 20 considéré sont transmises par ce dernier, via le système passerelle 35, à destination du noeud-relais 30 du deuxième réseau ad hoc, identifié par son adresse IP telle que définie dans la table de routage IP 10₂₀.

Dans une étape 105, le noeud-relais 20 considéré reçoit en provenance du noeud-relais actif 30 du deuxième réseau ad hoc 30, via le système de passerelle IP 35, des données de définition d'une zone de couverture radio Z2 déterminée par le noeud-relais 30 et correspondant à la couverture radio du deuxième réseau ad hoc 52.

Dans une étape 106, le noeud-relais 20 considéré détermine une zone d'intersection Z entre la zone de couverture radio Z1 du premier réseau ad hoc 51 et la zone de couverture radio Z2 du deuxième réseau ad hoc 52 telle que reçue.

Dans une étape 107, le noeud-relais 20 détermine si la zone d'intersection Z est nulle ou non.

Si à l'étape 107, il est déterminé que la zone d'intersection Z n'est pas nulle, alors dans une étape 108, le noeud-relais 20 détermine les noeuds du premier réseau ad hoc 51 situés dans la zone d'intersection, à l'aide des données de localisation des noeuds du premier réseau 51 mémorisées dans sa base de données 8₂₀ : dans le cas considéré, les noeuds 21 et 22.

Dans une étape 109, le noeud-relais 20 transmet à destination du noeud-relais actif 30, via le système de passerelle 35, des informations concernant ces noeuds 21 et 22 du premier réseau, par exemple : leurs données de localisation associées optionnellement à des données d'identification et/ou à des données indiquant l'heure de mesure des données de localisation fournie.

Dans une étape 110, le noeud-relais 20 reçoit, en provenance du noeud-relais actif 30, via le système de passerelle 35, des informations concernant les noeuds 31 et 32 du deuxième réseau, identifiées par le noeud-relais 30 comme les noeuds du deuxième réseau 52 situés dans la zone d'intersection Z, par exemple : leurs données de localisation associées optionnellement à des données d'identification et/ou à des données indiquant l'heure de mesure des données de localisation fournie.

Dans une étape 111, le noeud-relais 20 transmet à destination d'au moins les noeuds du premier réseau 21 et 22 situés dans la zone d'intersection Z, les données de localisation des noeuds 31 et 32 du deuxième réseau associées optionnellement à des données d'identification et/ou à des données indiquant l'heure de mesure des données de localisation fournie.

Si à l'étape 107, il est déterminé que la zone d'intersection Z est nulle, alors dans une étape 112, le noeud 20 estime une distance entre la zone de couverture Z1 du premier réseau 51 et la zone de couverture Z2 du deuxième réseau 52 ( par exemple égale à MIN(Distance(XZ1; Y€Z2)) ou X€Z1 représente tout noeud du premier réseau situé sur la zone Z1 et Y €PZ2 représente tout noeud du deuxième réseau appartenant à la zone Z2, MIN est la fonction « minimum » et Distance(x ; y) représente la distance entre les noeuds x et y.

Puis, dans une étape 113, il détermine en fonction de la distance déterminée à l'étape 112, une valeur actualisée de la fréquence F_{loc1} de mesure de la position des noeuds dans le premier réseau 51 et/ou une valeur actualisée de la fréquence de diffusion par les noeuds du premier réseau de leurs données de localisation actualisée et/ou de mise à jour des données de localisation des noeuds du premier réseau 51 dans la base de données des noeuds du premier réseau 51 (la fréquence augmentant lorsque la distance déterminée diminue)

On notera que l'ordre des étapes 104 et 105 peut bien sûr être interverti. Il en va de même pour l'ordre des étapes 109 et 110.

Les étapes décrites ci-dessus sont réitérés par le noeud 20 de façon régulière, par exemple à une fréquence donnée.

Les étapes décrites ci-dessus en référence au noeud-relais 20 sont dans le mode de réalisation considéré, mises en oeuvre également par le noeud-relais 30.

Dans un autre mode de réalisation, le noeud-relais se contente de transmettre les données de localisations des noeuds de son réseau au système de passerelle 35, l'ensemble des traitements de détermination des zones de couverture, Z1, Z2, Z (étapes 103-104, 106-107), de détermination de noeuds figurant dans la zone Z (étape 108) et de constitution des messages d'informations (étape 109) étant réalisé par le système de passerelle 35.

Ainsi l'invention, dans un mode de réalisation, permet de ne transmettre depuis un premier réseau ad hoc à destination d'un deuxième réseau ad hoc distinct du premier, seulement les informations de localisation concernant les noeuds du premier réseau à proximité de noeuds du deuxième réseau et vice-versa.

En outre, l'invention, dans un mode de réalisation, permet de diffuser au sein du premier réseau (respectivement du deuxième réseau, des informations de localisation de noeuds du deuxième réseau (respectivement du premier réseau) à destination uniquement des noeuds du premier réseau qui sont à proximité de ces noeuds du deuxième réseau dont les informations de localisation sont diffusées.

L'invention permet ainsi d'assurer un service de BFT géographique, tout en garantissant un volume réduit de transmission de données correspondantes.

La présente invention permet ainsi d'identifier et de faire connaître à des équipes alliées situées dans un voisinage géographique immédiat, leur position mutuelle, et ce indépendamment des moyens et protocoles radio utilisés, tout en obtenant une réduction important de la charge d'utilisation des ressources radio.

L'invention peut bien sûr être mise en oeuvre entre un nombre supérieur ou égal à trois, de réseaux présents sur une même zone géographique.

Par ailleurs, il a été considéré ci-dessus qu'un canal radio correspondait à une fréquence radio, ou à une plage de fréquences radio. Bien sûr, l'invention pourrait aussi bien être mise en oeuvre pour un canal radio égal à l'utilisation pendant une fraction temporelle d'une fréquence radio donnée, ou d'une plage de fréquences radio données.

Dans le mode de réalisation décrit en référence aux figures, les étapes 100 à 113 sont mises en oeuvre dans un module de traitement au sein du noeud-relais. Dans un autre mode de réalisation, tout ou partie de ces étapes identifiées sont réalisées dans un module de traitement extérieur au noeud, au sein du système de passerelle 35, par exemple dans un noeud IP tel que le noeud 41.

## Revendications

1. Procédé de communication entre un premier et un deuxième réseaux (51, 52) distincts de noeuds (2) de radiocommunications, lesdits réseaux étant reliés par un système de passerelle (35) le système de passerelle comprenant des premiers moyens de télécommunications (L1) avec au moins un premier noeud (20) du premier réseau et des deuxièmes moyens de télécommunications (L2) avec un deuxième noeud (30) du deuxième réseau, les noeuds étant dotés de moyens de radiocommunications (3) et de moyens de localisation géographique (6), le procédé comprenant :
a/ collecter des premières, respectivement deuxièmes, informations de localisation géographique des noeuds du premier (51), respectivement deuxième (52), réseau, lesdites informations étant déterminées et transmises par lesdits noeuds ;
b/ déduire une première (Z1), respectivement deuxième (Z2), zone de couverture géographique du premier, respectivement deuxième, réseau en fonction des premières, respectivement deuxièmes, informations de localisation géographique ; le procédé étant **caractérisé en ce qu'**il comprend les étapes suivantes :
c/ déterminer une zone d'intersection (Z) des première et deuxième zones de couvertures géographiques ;
d/ identifier en fonction des premières, respectivement deuxièmes, informations de localisation collectées, des noeuds du premier, respectivement deuxième, réseau, localisés à l'intérieur de ladite zone d'intersection ;
e/ transmettre auxdits noeuds du premier réseau identifiés, depuis le système de passerelle et via ledit premier noeud (20), des données indiquant les localisations géographiques collectées des noeuds du deuxième réseau identifiés.

2. Procédé de communication selon la revendication 1, comprenant en outre l'étape suivante :
f/ transmettre auxdits noeuds du deuxième réseau identifiés, depuis le système de passerelle (35), via ledit deuxième noeud (30), des données indiquant les localisations géographiques collectées des noeuds du premier réseau identifiés.

3. Procédé de communication selon la revendication 1 ou 2, selon lequel le premier réseau (51) et/ou le deuxième réseau (52) est un réseau radiocommunications ad hoc.

4. Procédé de communication selon la revendication 3, selon lequel certaines des étapes a/ à d/, ou toutes les étapes a/ à d/, sont mises en oeuvre par des noeuds de radiocommunications ad hoc.

5. Procédé de communication selon l'une quelconque des revendications 1 à 4, selon lequel certaines des étapes a/ à d/, ou toutes les étapes a/ à d/, sont mises en oeuvre par le système passerelle (35).

6. Procédé de communication selon l'une quelconque des revendications précédentes, selon lequel les données indiquant les localisations géographiques collectées des noeuds identifiés sont accompagnées de données d'identification desdits noeuds identifiés et/ou d'une indication temporelle relative à la localisation.

7. Procédé de communication selon l'une quelconque des revendications précédentes, selon lequel au moins les étapes a/ à d/ sont réitérées régulièrement suite à la transmission par les noeuds d'informations actualisées de localisation.

8. Procédé de communication selon l'une quelconque des revendications précédentes, selon lequel si à l'étape c/, il est déterminé que les première (Z1) et deuxième (Z2) zones de couverture géographique ne comportent pas de zone d'intersection, une distance entre les première et deuxième zones de couverture géographique est calculée, et une période d'actualisation de la localisation géographique des noeuds est déterminée en fonction d'au moins ladite distance calculée.

9. Module de traitement (5) adapté pour opérer dans un système de communication comportant un premier réseau (51) de noeuds de radiocommunications relié par un système de passerelle (35) à un deuxième réseau distinct de noeuds de radiocommunications, le système de passerelle comprenant des premiers moyens de télécommunications (L1) avec au moins un premier noeud (20) du premier réseau et des deuxièmes moyens de télécommunications (L2) avec un deuxième noeud (30) du deuxième réseau, les noeuds étant dotés de moyens de radiocommunications (3) et de moyens de localisation géographique (6),
le module de traitement étant adapté pour collecter des premières informations de localisation géographique des noeuds (20-24) du premier réseau, lesdites informations étant déterminées et transmises par lesdits noeuds, et pour en déduire une première zone (Z1) de couverture géographique du premier réseau ;
le module de traitement étant **caractérisé en ce qu'**il est adapté pour déterminer une zone d'intersection (Z) entre ladite première zone de couverture géographique et une deuxième zone de couverture du deuxième réseau et pour identifier, en fonction des premières informations de localisation collectées, des noeuds du premier réseau localisés à l'intérieur de ladite zone d'intersection ;
recevoir des données provenant du système de passerelle (35) et indiquant des localisations géographiques au moins de noeuds du deuxième réseau identifiés comme localisés dans la zone d'intersection et pour transmettre auxdits noeuds du premier réseau identifiés, via ledit premier noeud, lesdites données indiquant les localisations géographiques collectées des noeuds du deuxième réseau identifiés.

10. Module de traitement (5) selon la revendication 9, adapté en outre pour constituer un message comprenant des données définissant la zone d'intersection (Z) et pour transmettre ledit message par l'intermédiaire du système passerelle (35).

11. Module de traitement (5) selon la revendication 9 ou 10, adapté en outre pour constituer au moins un message comprenant des données indiquant des localisations géographiques des noeuds du premier réseau (51) localisés à l'intérieur de ladite zone d'intersection (Z) et pour transmettre ledit message par l'intermédiaire du système passerelle (35).

12. Module de traitement (5) selon la revendication 11, adapté pour inclure dans le message des données d'identification desdits noeuds identifiés et/ou d'une indication temporelle relative à la localisation.

13. Module de traitement (5) selon l'une quelconque des revendications 9 à 12, adapté pour réitérer la collecte des informations de localisation géographique des noeuds du premier réseau (51), la déduction d'une première zone (Z1) de couverture géographique du premier réseau, la détermination d'une zone d'intersection(Z) et l'identification de noeuds présents dans la zone d'intersection, régulièrement, suite à la transmission par les noeuds d'informations actualisées de localisation.

14. Module de traitement (5) selon l'une quelconque des revendications 9 à 13, adapté pour, quand les première (Z1) et deuxième (Z2) zones de couverture géographique ne comportent pas de zone d'intersection, calculer une distance entre les première et deuxième zones de couverture géographique, et déterminer une période d'actualisation de la localisation géographique des noeuds en fonction d'au moins ladite distance calculée.

15. Station (2) émettrice/réceptrice radiofréquence, adaptée pour constituer un noeud d'un réseau ad hoc et comportant un module de traitement (5) selon l'une des revendications 9 à 14.

16. Programme d'ordinateur destiné à une station (2) émettrice/réceptrice radiofréquence, adaptée pour constituer un noeud d'un réseau, ledit programme comprenant des instructions pour mettre en oeuvre les étapes suivantes lors d'une exécution du programme par des moyens de traitement de ladite station :
- collecter des premières informations de localisation géographique des noeuds d'un premier réseau (51) dont fait partie la station, lesdites informations étant déterminées et transmises par lesdits noeuds, et pour en déduire une première zone (Z1) de couverture géographique du premier réseau ;
- déterminer une zone d'intersection (Z) entre ladite première zone de couverture géographique et une deuxième zone (Z2) de couverture d'un deuxième réseau (52) distinct du premier réseau et identifier, en fonction des premières informations de localisation collectées, des noeuds du premier réseau localisés à l'intérieur de ladite zone d'intersection ;
- recevoir des données indiquant des localisations géographiques au moins de noeuds du deuxième réseau identifiés comme localisés dans la zone d'intersection et transmettre auxdits noeuds du premier réseau identifiés lesdites données indiquant les localisations géographiques collectées des noeuds du deuxième réseau identifiés.

## Patentansprüche

1. Verfahren zur Kommunikation zwischen einem separaten ersten und zweiten Netzwerk (51, 52) aus Radiokommunikationsknoten (2), wobei die Netzwerke durch ein Schnittstellensystem (35) miteinander verbunden sind, wobei das Schnittstellensystem erste Telekommunikationsmittel (L1) mit zumindest einem ersten Knoten (20) des ersten Netzwerks und zweite Telekommunikationsmittel (L2) mit einem zweiten Knoten (30) des zweiten Netzwerks umfasst, wobei die Knoten mit Radikommunikationsmitteln (3) und geografischen Ortungsmitteln (6) versehen sind, wobei das Verfahren Folgendes umfasst:
a/ Erfassen von ersten bzw. zweiten geografischen Ortungsinformationen der Knoten des ersten (51) bzw. zweiten (52) Netzwerks, wobei die Informationen durch die Knoten ermittelt und übertragen werden;
b/ Herleiten eines ersten (Z1) bzw. zweiten (Z2) geografischen Abdeckungsbereichs des ersten bzw. zweiten Netzwerks in Abhängigkeit von den ersten bzw. zweiten geografischen Ortungsinformationen; wobei das Verfahren **dadurch gekennzeichnet ist, dass** es die folgenden Schritte umfasst:
c/ Ermitteln eines Schnittbereichs (Z) des ersten und des zweiten geografischen Abdeckungsbereichs;
d/ Identifizieren von Knoten des ersten bzw. zweiten Netzwerks, die sich im Inneren des Schnittbereichs befinden, in Abhängigkeit von den ersten bzw. zweiten erfassten Ortungsinformationen;
e/ Übertragen von Daten, die die erfassten geografischen Standorte der identifizierten Knoten des zweiten Netzwerks angeben, von dem Schnittstellensystem aus und über den ersten Knoten (20) an die identifizierten Knoten des ersten Netzwerks.

2. Verfahren zur Kommunikation nach Anspruch 1,
des Weiteren den folgenden Schritt umfassend:
f/ Übertragen von Daten, die die erfassten geografischen Standorte der identifizierten Knoten des ersten Netzwerks angeben, von dem Schnittstellensystem (35) aus über den zweiten Knoten (30) an die identifizierten Knoten des zweiten Netzwerks.

3. Verfahren zur Kommunikation nach Anspruch 1 oder 2,
wonach das erste Netzwerk (51) und/oder das zweite Netzwerk (52) ein Ad-hoc-Radiokommunikationsnetzwerk ist.

4. Verfahren zur Kommunikation nach Anspruch 3,
wonach einige der Schritte a/ bis d/ oder alle Schritte a/ bis d/ durch Ad-hoc-Radiokommunikationsknoten durchgeführt werden.

5. Verfahren zur Kommunikation nach einem der Ansprüche 1 bis 4,
wonach einige der Schritte a/ bis d/ oder alle Schritte a/ bis d/ durch das Schnittstellensystem (35) durchgeführt werden.

6. Verfahren zur Kommunikation nach einem der vorangehenden Ansprüche,
wonach die Daten, die die erfassten geografischen Standorte der identifizierten Knoten angeben, mit Identifizierungsdaten der identifizierten Knoten und/oder mit Daten einer auf die Ortung bezogenen Zeitangabe gekoppelt sind.

7. Verfahren zur Kommunikation nach einem der vorangehenden Ansprüche,
wonach zumindest die Schritte a/ bis d/ regelmäßig im Anschluss an die Übertragung von aktualisierten Ortungsinformationen durch die Knoten wiederholt werden.

8. Verfahren zur Kommunikation nach einem der vorangehenden Ansprüche,
wonach, falls bei Schritt c/ ermittelt wird, dass der erste (Z1) und der zweite (Z2) geografische Abdeckungsbereich keinen Schnittbereich aufweisen, ein Abstand zwischen dem ersten und dem zweiten geografischen Abdeckungsbereich berechnet wird, und eine Aktualisierungsperiode der geografischen Ortung der Knoten zumindest in Abhängigkeit von dem berechneten Abstand ermittelt wird.

9. Verarbeitungsmodul (5), das dazu geeignet ist, in einem Kommunikationssystem betrieben zu werden, das ein erstes Netzwerk (51) aus Radiokommunikationsknoten aufweist, das durch ein Schnittstellensystem (35) mit einem zweiten, separaten Netzwerk aus Radiokommunikationsknoten verbunden ist, wobei das Schnittstellensystem erste Telekommunikationsmittel (L1) mit zumindest einem ersten Knoten (20) des ersten Netzwerks und zweite Telekommunikationsmittel (L2) mit einem zweiten Knoten (30) des zweiten Netzwerks umfasst, wobei die Knoten mit Radiokommunikationsmitteln (3) und geografischen Ortungsmitteln (6) versehen sind,
wobei das Verarbeitungsmodul dazu geeignet ist,
erste geografische Ortungsinformationen der Knoten (20-24) des ersten Netzwerks zu erfassen, wobei die Informationen durch die Knoten ermittelt und übertragen werden, sowie dazu, daraus einen ersten geografischen Abdeckungsbereich (Z1) des ersten Netzwerks herzuleiten,
wobei das Verarbeitungsmodul **dadurch gekennzeichnet ist, dass** es zu Folgendem geeignet ist:
einen Schnittbereich (Z) zwischen dem ersten geografischen Abdeckungsbereich und einem zweiten Abdeckungsbereich des zweiten Netzwerks zu ermitteln und in Abhängigkeit von den ersten erfassten Ortungsinformationen im Inneren des Schnittbereichs befindliche Knoten des ersten Netzwerks zu identifizieren;
Daten zu empfangen, die von dem Schnittstellensystem (35) stammen und zumindest geografische Standorte von als in dem Schnittbereich befindlich identifizierten Knoten des zweiten Netzwerks angeben,
sowie die Daten, die die erfassten geografischen Standorte der identifizierten Knoten des zweiten Netzwerks angeben, über den ersten Knoten an die identifizierten Knoten des ersten Netzwerks zu übertragen.

10. Verarbeitungsmodul (5) nach Anspruch 9,
das des Weiteren dazu geeignet ist, eine Nachricht zu bilden, die den Schnittbereich (Z) bestimmende Daten umfasst, sowie die Nachricht mittels des Schnittstellensystems (35) zu übertragen.

11. Verarbeitungsmodul (5) nach Anspruch 9 oder 10,
das des Weiteren dazu geeignet ist, zumindest eine Nachricht zu bilden, die Daten umfasst, die geografische Standorte der im Inneren des Schnittbereichs (Z) befindlichen Knoten des ersten Netzwerks (51) angeben, sowie die Nachricht mittels des Schnittstellensystems (35) zu übertragen.

12. Verarbeitungsmodul (5) nach Anspruch 11,
das dazu geeignet ist, in die Nachricht Identifizierungsdaten der identifizierten Knoten und/oder Daten einer auf die Ortung bezogenen Zeitangabe einzubeziehen.

13. Verarbeitungsmodul (5) nach einem der Ansprüche 9 bis 12,
das dazu geeignet ist, die Erfassung der geografischen Ortungsinformationen der Knoten des ersten Netzwerks (51), die Herleitung eines ersten geografischen Abdeckungsbereichs (Z1) des ersten Netzwerks, die Ermittlung eines Schnittbereichs (Z) sowie die Identifizierung von in dem Schnittbereich vorliegenden Knoten regelmäßig, im Anschluss an die Übertragung von aktualisierten Ortungsinformationen durch die Knoten zu wiederholen.

14. Verarbeitungsmodul (5) nach einem der Ansprüche 9 bis 13,
das dazu geeignet ist, wenn der erste (Z1) und der zweite (Z2) geografische Abdeckungsbereich keinen Schnittbereich aufweisen, einen Abstand zwischen dem ersten und dem zweiten geografischen Abdeckungsbereich zu berechnen, und eine Aktualisierungsperiode der geografischen Ortung der Knoten zumindest in Abhängigkeit von dem berechneten Abstand zu ermitteln.

15. Radiofrequenz-Sende-/Empfangsstation (2), die dazu geeignet ist, einen Knoten eines Ad-hoc-Netzwerks zu bilden, und die ein Verarbeitungsmodul (5) nach einem der Ansprüche 9 bis 14 aufweist.

16. Computerprogramm für eine Radiofrequenz-Sende-/Empfangsstation (2), die dazu geeignet ist, einen Knoten eines Netzwerks zu bilden, wobei das Programm Befehle zum Durchführen der folgenden Schritte während einer Ausführung des Programms durch Verarbeitungsmittel der Station umfasst:
- Erfassen von ersten geografischen Ortungsinformationen der Knoten eines ersten Netzwerks (51), dem die Station angehört, wobei die Informationen durch die Knoten ermittelt und übertragen werden, sowie daraus Herleiten eines ersten geografischen Abdeckungsbereichs (Z1) des ersten Netzwerks;
- Ermitteln eines Schnittbereichs (Z) zwischen dem ersten geografischen Abdeckungsbereich und einem zweiten Abdeckungsbereich (Z2) eines zweiten, vom ersten Netzwerk separaten Netzwerks (52) sowie Identifizieren von Knoten des ersten Netzwerks, die sich im Inneren des Schnittbereichs befinden, in Abhängigkeit von den ersten erfassten Ortungsinformationen;
- Empfangen von Daten, die zumindest geografische Standorte von als in dem Schnittbereich befindlich identifizierten Knoten des zweiten Netzwerks angeben, sowie Übertragen der Daten, die die erfassten geografischen Standorte der identifizierten Knoten des zweiten Netzwerks angeben, an die identifizierten Knoten des ersten Netzwerks.

## Claims

1. A communication method between a first and second distinct ad hoc networks (51, 52) with radio communication nodes (2), said networks being connected by a gateway system (35), the gateway system comprising first telecommunications means (L1) with at least one first node (20) of the first network and second telecommunications means (L2) with a second node (30) of the second network, the nodes being equipped with radio communication means (3) and geographic location means (6),
the method comprising the following steps:
a/ collecting first, second, respectively, geographical location information for the first (51), second (52), respectively, network nodes, said information being determined and transmitted by said nodes;
b/ deducing a first (Z1), second (Z2), respectively, geographical coverage area of the first, second, respectively, network as a function of first, second, respectively, geographical location information;
the method being **characterized in** comprising the following steps:
c/ determining an intersection zone (Z) of the first and second geographical coverage areas;
d/ identifying, as a function of the first, second, respectively, collected location information, nodes of the first, second network, respectively, located inside said intersection zone;
e/ sending said identified nodes of the first network, from the gateway system and by means of said first node (20), data indicating the collected geographical locations of the identified nodes of the second network.

2. The communication method according to claim 1, also comprising the following step:
f/ sending said identified nodes of the second network, from the gateway system (35), by means of said second node (30), data indicating the collected geographical locations of the identified nodes of the first network;

3. The communication method according to claim 1 or 2, wherein the first network (51) and/or the second network (52) is an ad hoc radio communication network.

4. The communication method according to claim 3, wherein some of the steps a/ to d/, or all of the steps a/ to d/, are carried out by ad hoc radio communication nodes.

5. The communication method according to any of claims 1 to 4, wherein some of the steps a/ to d/, or all of the steps a/ to d/, are carried out by the gateway system (35).

6. The communication method according to any of claims 1 to 5, wherein the data indicating the collected geographical locations of the identified nodes is accompanied by identification data for said identified nodes and/or a time indication relative to the location.

7. The communication method according to any of claims 1 to 6, wherein at least steps a/ to d/ are regularly reiterated following the transmission by the nodes of updated location information.

8. The communication method according to any of claims 1 to 7 , wherein if in step c/ it is determined that the first (Z1) and second (Z2) geographical coverage areas do not include intersection zones, a distance between the first and second geographical coverage areas is computed, and an update period for the geographical location of the nodes is determined as a function at least of said computed distance.

9. A processing module (5) adapted to operate in a communication system including a first network (51) of radio communication nodes connected by a gateway system (35) to a second, distinct network of radio communication nodes, the gateway system comprising first telecommunications means (L1) with at least one first node (20) of the first network and second telecommunications means (L2) with a second node (30) of the second network, the nodes being equipped with radio communication means (3) and geographical location means (6),
the processing module being adapted to collect first geographical location information for the nodes (20-24) of the first network, said information being determined and transmitted by said nodes, and to deduce therefrom a first geographical coverage area (Z1) of said first network;
the processing module being **characterized in** being:
- to determine an intersection zone (Z) between said first geographical coverage area and a second coverage area of the second network and to identify, as a function of the first collected location information, nodes of the first network located inside said intersection zone;
- to receive data coming from the gateway system and indicating geographical locations at least of nodes of the second network that are identified as located in the intersection zone and to transmit to said identified nodes of the first network, by means of said first node, said data indicating the collected geographical locations of the identified nodes of the second network.

10. The processing module (5) according to claim 9, also adapted to form a message comprising data defining the intersection zone (Z) and to transmit said message by means of the gateway system (35).

11. The processing module (5) according to claim 9 or 10, also adapted to form at least one message comprising data indicating geographical locations of the nodes of the first network (51) located within said intersection zone (Z) and to transmit said message by means of the gateway system.

12. The processing module (5) according to claim 11, adapted to include identification data for said identified nodes and/or a time indication relative to the location in the message.

13. The processing module (5) according to any of claims 9 to 12, adapted to reiterate the collection of the geographical location information for the nodes of the first network (51), the deduction of a first geographical coverage zone (Z1) of the first network, the determination of an intersection zone (Z) and the identification of nodes present in the intersection zone, regularly, following the transmission of updated location information by the nodes.

14. The processing module (5) according to any of claims 9 to 13, adapted so as, when the first (Z1) and second (Z2) geographical coverage zones do not include intersection zone, to compute a distance between the first and second geographical coverage zones, and determine an update period for the geographical location of the nodes as a function of at least said computed distance.

15. A transceiver station (2) adapted to form a node of the ad hoc network and including a processing module (5) according to any one of claims 9 to 14.

16. A computer program intended for a radiofrequency transceiver station (2), adapted to form a node of the network, said program comprising instructions for updating the following steps when the program is run by the processing means of said station:
- collecting first geographical location information of the nodes of a first network (51) to which the station belongs, said information being determined and transmitted by said nodes, and deducing a first geographical coverage area (Z1) of the first network therefrom;
- determining an intersection zone (Z) between said first geographical coverage area and a second coverage area (Z2) of a second network (52) distinct from the first network and identifying, as a function of the first collected location information, nodes of the first network located inside said intersection zone;
- receiving data indicating geographical locations at least of nodes of the second network identified as located in the intersection zone and transmitting, to said identified nodes of the first network, said data indicating the collected geographical locations of the identified nodes of the second network.
